# EUROPÄISCHE PATENTSCHRIFT

(11) **EP 2 428 180 B1**
(45) Veröffentlichungstag und Bekanntmachung des Hinweises auf die Patenterteilung: **09.11.2016**
(21) Anmeldenummer: 10009446.5
(22) Anmeldetag: 10.09.2010
(51) Int. Cl.: A61C 8/00

(54) **Dental-Implantatsystem**
Dental implant system
Système d'implant dentaire

(43) Veröffentlichungstag der Anmeldung: 14.03.2012
(73) Patentinhaber: CPM Präzisionsdrehtechnik GmbH, 69493 Hirschberg (DE)
(72) Erfinder: Maier, Claus-Peter, 69518 Abtsteinach (DE)
(74) Vertreter: Tergau & Walkenhorst Patentanwälte - Rechtsanwälte

(56) Entgegenhaltungen:
- EP-A1- 1 992 304
- EP-A1- 2 143 398
- WO-A1-00/54696
- DE-U1-202008 016 218

## Beschreibung

Die Erfindung betrifft ein Dental-Implantatsystem mit einem zur Einbringung in einen Kieferknochen vorgesehenen ersten Implantat-Teil und mit einem diesem zugeordneten, zur Anbringung eines Zahnersatzstücks vorgesehenen zweiten Implantat-Teil, wobei die Implantat-Teile über einen an eines der Implantat-Teile angeformten, in einen im anderen Implantat-Teil vorgesehenen Aufnahmekanal einschiebbaren Verbindungszapfen mechanisch miteinander verbindbar sind.

Dentalimplantate sind in vielfältigen Formen bekannt. Beispiele von bekannten Dentalimplantate werden in EP1992304 und WO2008/071368 offenbart. Sie werden üblicherweise anstelle eines extrahierten oder ausgefallenen Zahnes in den Kieferknochen eingesetzt, um dort nach einer Einheilphase von drei bis vier Monaten ein als Zahnersatz dienendes prothetisches Teil oder eine Krone zu halten. Dazu ist ein derartiges Dentalimplantat üblicherweise als geeignet geformter Metallkörper ausgebildet, wobei das Dentalimplantat üblicherweise durch Einschrauben an der vorgesehenen Stelle in den Kieferknochen eingesetzt wird. Das Dentalimplantat weist dabei in der Regel am apikalen Ende ein zumeist selbstschneidendes Schraubengewinde auf, mit welchem das Dentalimplantat in das entsprechend präparierte Implantatbett eingesetzt wird.

Um eine erleichterte Einbringung in den Patientenmund und insbesondere eine besonders weitgehende Vorbereitung der eigentlichen Prothese bei der Anbringung an das Implantat bereits im Vorfeld der Patientenbehandlung, im beispielsweise in einem zahntechnischen Labor, zu ermöglichen, können Dental-Implantatsysteme mehrteilig ausgeführt sein. Insbesondere kann dabei ein grundsätzlich zweiteiliger Aufbau vorgesehen sein, wobei das Dental-Implantatsystem ein erstes, zur Einbringung in den Kieferknochen vorgesehenes, auch als eigentliches Implantat oder Pfostenteil bezeichnetes Implantat-Teil und zusätzlich zu diesem ein zugeordnetes zweites, auch als Aufbauteil bezeichnetes zweites Implantat-Teil umfasst, an das wiederum das als Prothese oder dergleichen vorgesehene Zahnersatzstück anbringbar ist. Das erste Implantat-Teil oder Pfostenteil und ebenso das zweite Implantat-Teil oder Kopf- oder Aufbauteil bestehen üblicherweise aus Metall oder einer Keramik, und zwar insbesondere aus Titan, Zirkon, einer Titanlegierung, Zirkonlegierung, einer titanhaltigen Legierung, einer zirkonhaltigen Legierung, einer Zirkonoxid-Aluminiumoxid-Keramik oder einer Keramik, die entweder Zirkonoxid oder Aluminiumoxid beinhaltet oder mindestens eine der Keramiken als Hauptbestandteil aufweist.

Darüber hinaus können Keramiken eingesetzt werden, die auf Silizium- oder Siliziumoxidbasis aufgebaut sind und z.B. Beimischungen von Stickstoff, Wasserstoff, Kohlenstoff oder Wolfram beinhalten. Das erste Implantat-Teil oder Pfostenteil ist an seiner Außenseite üblicherweise mit einem Gewinde versehen, welches als selbstschneidendes oder auch als nicht selbstschneidendes Gewinde ausgeführt sein kann. Das Pfostenteil wird üblicherweise in einem entsprechend aufbereiteten Implantatbett des Kieferknochens verankert. Die Konstruktion des im Außenbereich des Dentalimplantats vorgesehenen Gewindes ist dabei üblicherweise für eine hohe Primärstabilität der Anordnung und eine gleichmäßige Weiterleitung der bei der Kaubelastung des Dentalimplantats auftretenden Kräfte in den Kieferknochen ausgelegt.

Zur mechanischen Verbindung der Implantat-Teile miteinander ist üblicherweise ein an eines der Implantat-Teile, in der Regel an das Aufbauteil, angeformter Verbindungszapfen vorgesehen. Dieser ist in einen im anderen Implantat-Teil, in der Regel im Pfostenteil, vorgesehenen Aufnahmekanal einschiebbar. Hinsichtlich Geometriewahl und Dimensionierung, insbesondere der Querschnitte, sind der Verbidungszapfen einerseits und der Aufnahmekanal andererseits dabei üblicherweise derart aneinander angepasst, das bei vergleichsweise einfacher Montierbarkeit dennoch eine gute Führung der Bauteile ineinander und damit eine ausreichend hohe mechanische Stabilität erreichbar sind. Das Aufbauteil, das üblicherweise an seinem oberen Bereich mit einer Krone, einer anderen prothetischen Versorgung oder dergleichen in an sich bekannter Weise ausgestattet wird, kann dabei zur mechanischen Verbindung mit dem Pfostenteil über den in den Aufnahmekanal eingeschobenen Verbindungszapfen mit dem Pfostenteil verklebt sein. Das Aufbauteil kann aber auch in das Pfostenteil eingepresst werden und lediglich über eine Verklemmung fixiert werden, oder auch zusätzlich durch eine Zementierung oder Verklebung fixiert werden.

Allerdings wird bei derartigen Implantatsystemen das Dentalimplantat beim Einschrauben des Aufbauteils und insbesondere auch später bei Kauvorgängen mechanisch extrem stark belastet, so dass eine Klebeverbindung der genannten Art möglicherweise gerade im Hinblick auf die angestrebte sehr lange Verweildauer im Patientenmund keine ausreichend hohe mechanische Stabilität aufweist. Um dem Rechnung zu tragen, kann das Aufbauteil alternativ auch über eine geeignet gewählte Verbindungsschraube mit dem Pfostenteil verschraubt sein. Bei der Einbringung wird dabei üblicherweise das Gewinde der Verbindungsschraube in ein zugeordnetes Innengewinde im Pfostenteil eingeschraubt. Der Schraubenkopf der Verbindungsschraube presst dabei beim Einschrauben über eine Stirnsenkung des Aufbauteils dieses auf das Dentalimplantat.

Mit derartigen, verschraubten Systemen ist üblicherweise eine hohe mechanische Stabilität erreichbar. Allerdings muss dabei die Verbindungsschraube von oben her erreichbar sein, um die Fixierung zu ermöglichen. Damit liegt die obere Kontaktfläche der Verbindungsschraube frei und zugänglich offen, so dass ein Abschluss des Systems beispielsweise gegenüber eindringenden Keimen oder Verunreinigungen nicht ausreichend erreichbar ist. Zudem findet eine metallische Oberfläche wie beispielsweise die Oberfläche des Schraubenkopfs die Anhaftung von Plaque und dadurch bedingt weitere Anlagerungen, die zu unerwünschten Verunreinigungen führen können.

Der Erfindung liegt daher die Aufgabe zugrunde, ein Implantatsystem der oben genannten Art anzugeben, das gerade auch im Hinblick auf die angestrebten langen Nutzungsdauern eine besonders hohe Stabilität aufweist und dennoch gegenüber Keimen oder Verschmutzungen eine besonders hohe Dichtigkeit aufweist.

Diese Aufgabe wird erfindungsgemäß gelöst durch einen im eingeschobenen Zustand des Verbindungszapfens vollständig von den Implantat-Teilen umschlossenen Versteifungszapfen.

Die Erfindung wird im Anspruch 1 definiert.

Vorteilhafte Ausgestaltungen der Erfindung sind Gegenstand der Unteransprüche. Die Erfindung geht von der Überlegung aus, dass das Implantatsystem im Hinblick auf die gewünschte Dichtigkeit gegenüber eindringenden Keimen oder Verunreinigungen grundsätzlich für eine formschlüssige Verbindung der Implantat-Teile miteinander unter Vermeidung von außen zugänglichen, frei liegenden Verbindungsteilen wie beispielsweise Verbindungsschrauben oder dergleichen ausgelegt sein sollte. Um dennoch auch auf dieser Basis die gewünschte mechanische Stabilität zu erreichen, sollte ein innenliegendes Stabilisierungselement vorgesehen sein, das bei an sich gekapselter Ausführung eine zuverlässige Last- und Kraftübertragung zwischen den Implantat-Teilen bewirkt.

Um diese Last- und Kraftübertragung zwischen den Implantat-Teilen besonders zuverlässig zu gewährleisten, ist der als Stabilisierungselement vorgesehene Versteifungszapfen in vorteilhafter Ausgestaltung geeignet in den beiden Implantat-Teilen geführt und gelagert. Dazu sollte der Versteifungszapfen in der Art einer mechanischen Überbrückung oder Verbindung der Implantat-Teile zu- bzw. miteinander endseitig geeignet in die beiden Implantat-Teile hineinragen und dort jeweils geeignet fixiert und geführt sein. Dazu ist der Versteifungszapfen vorteilhafterweise in montiertem Zustand mit seinen beiden Enden jeweils formschlüssig in einem zugeordneten Aufnahmekanal im jeweiligen Implantat-Teil geführt ist. In weiterer vorteilhafter Ausgestaltung ist der Versteifungszapfen dabei in im wesentlichen zylindrischer Bauform ausgeführt.

Hinsichtlich der Materialwahl sind die jeweiligen Komponenten, insbesondere die Implantat-Teile, vorteilhafterweise im Hinblick auf eine hohe Langzeitstabilität gerade im vorgesehenen Einsatzumfeld und auch im Hinblick auf besonders gute Verträglichkeit und Bio-Kompatibilität geeignet gewählt. Für die Implantat-Teile wird dabei vorteilhafterweise eine Keramik, insbesondere Zirkonoxid oder Aluminiumoxid, verwendet, jedenfalls als Hauptbestandteil, wodurch ein metallfreier Grundkörper bereitgestellt wird. Alternativ dazu können auch Zirkonium, eine andere Keramik, oder Titan verwendet werden. Diese Materialien können auch miteinander kombiniert werden. In alternativer vorteilhafter Ausgestaltung kann auch, je nach Anpassung an individuelle Bedürfnisse oder Vorgaben, ein hochbelastbarer thermoplastischer Kunststoff aus der Gruppe der Polyetherketone für eines oder beide der Implantat-Teile verwendet werden, insbesondere Polyetheretherketon, auch als PEEK bekannt. Derartige Materialien zeichnen sich durch ihre hervorragende Biokompatibiltät aus und ermöglichen eine bakterienresistente und insbesondere stoffschlüssige Verbindung zwischen den Implantat-Teilen. Für den Versteifungszapfen wird vorteilhafterweise eine Keramik, vorzugsweise Zirkonoxid oder Aluminiumoxid, Titan oder eine Titanlegierung als Grundstoff verwendet.

Für die dauerhafte Verbindung zwischen den Implantat-Teilen eignen sich unterschiedliche Techniken. Besonders vorteilhaft werden die Implantat-Teile miteinander verpresst und/oder verklebt oder zementiert, so dass eine stoffschlüssige Verbindung entsteht.

Um eine zuverlässige mechanische Verbindung zwischen den Implantat-Teilen bei hoher Dichtigkeit zu ermöglichen, weist der Verbindungszapfen vorteilhafterweise im Querschnitt eine an die Kontur des zugeordneten Aufnahmekanals angepasste Aussenkontur auf. In Längsrichtungvon Verbindungszapfen oder Aufnahmekanal gesehen können beide zudem in weiterer vorteilhafter Ausgestaltung konisch ausgeführt sein, so dass sich auf besonders einfache Weise ein guter Kraftschluss bei hoher Dichtigkeit erzielen lässt. In weiterer vorteilhafter Ausgestaltung weist die Aussenkontur des Verbindungszapfens - und entsprechend daran angepasst der Aufnahmekanal in seiner Innenkontur- im Querschnitt eine mehrzählige Symmetrie auf. Damit ist einerseits in der Art einer Indizierung auf einfache Weise eine zuverlässige rotatorische Ausrichtung des Aufbauteils bei der Montage, also bei der Einbringung in den Patientenmund, erreichbar, wobei andererseits in der Art eines rotatorischen Gesperres selbst bei der Einleitung hoher Drehmomente in das System die gewählte rotatorische Ausrichtung in der Zahnumgebung zuverlässig erhalten bleibt.

Problematisch bei der Verwendung mehrteiliger Implantatsysteme könnte zudem der Belastungsstress zwischen den Implantat-Teilen infolge der Einleitung von Kräften beim Kauen oder dergleichen sein. Gerade bei der Verwendung vergleichsweise spröder Materialien wie beispielsweise Keramik für die Implantat-Teile könnte derartiger Belastungsstress in - insbesondere ermüdungsbedingten - Brüchen oder Rissen im Material resultieren. Um dem Rechnung zu tragen, ist in besonders vorteilhafter Ausgestaltung ein Dämpfungskörper zur Reduktion dieses Belastungsstresses vorgesehen, der im montierten Zustand zwischen den Implantat-Teilen angeordnet und aus einem im Vergleich zu mindestens einem der Implantat-Teile weicheren Material gefertigt ist.

Dem liegt die Erkenntnis zu Grunde, dass sich der genannte Belastungsstress reduzieren lässt, indem das Aufbauteil und der Grundkörper in der Formausnehmung nicht direkt miteinander in Kontakt stehen. Durch einen zwischengelagerten Kern oder Dämpfungskörper, der gewissermaßen als Adapter oder Zwischenstück zwischen Grundkörper und Aufbauteil fungiert, kann bei geeigneter Materialwahl ein Stressabbauer bzw. Stressabsorber realisiert werden. Durch den mehrkomponentigen Aufbau des Dentalimplantats werden mechanische Belastungen überwiegend in den Dämpfungskörper abgeleitet und von diesem aufgenommen. Das Material des Dämpfungskörpers, vorteilhafterweise PEEK, kann spezifisch für eine derartige Aufgabe ausgewählt sein, während das Pfostenteil in bewährter Weise aus einem Material bestehen kann, das im Hinblick auf die gewünschte Verankerung im umliegenden Kiefergewebe optimiert ist. Dabei wird das Pfostenteil durch die Nachgiebigkeit des zwischengelagerten Dämpfungskörpers bei über das Aufbauteil eingeleiteten Belastungen weniger strapaziert, wodurch seine Lebenszeit signifikant erhöht wird und Brüche oder Risse infolge von Materialsprödigkeit verhindert werden.

Vorteilhafterweise weist das Material des Dämpfungskörpers dabei einen im Vergleich zum Material des oder der Implantat-Teile geringeren Elastizitätsmodul auf. Der geringere Elastizitätsmodul erlaubt die Absorption von auf das Aufbauteil wirkenden Kräften im Kern und führt zu einer Reduzierung der Materialbelastung des Pfostenteils. Ein ergänzendes oder alternatives Kriterium für die Materialwahl kann darin bestehen, dass das Material des Dämpfungskörpers eine größere Zähigkeit und/oder Duktilität aufweist als das Material des Pfostenteils. Der Dämpfungskörper kann sich dann bei temporärer überbelastung bedarfsweise in einem größeren Maße elastisch oder auch plastisch verformen, bevor Spannungsrisse auftreten.

In einer bevorzugten Ausführungsform weist das Pfostenteil eine Formausnehmung zur Aufnahme des Dämpfungskörpers auf, wobei der Dämpfungskörper in Form bzw. nach Art eines Adapters einen Aufnahmekanal für das Aufbauteil bildet. Der Dämpfungskörper ist also räumlich zwischen Pfostenteil und Aufbauteil angeordnet und umgibt nach Art einer Hülse den Verbindungszapfen des Aufbauteils, so dass Aufbauteil und Pfostenteil nicht direkt in Kontakt stehen. Dadurch wird gewährleistet, dass der Dämpfungskörper bei Kräften aus unterschiedlichen Richtungen stets seine druckabsorbierende Wirkung ausüben kann.

Die mit der Erfindung erzielten Vorteile bestehen insbesondere darin, dass durch den Versteifungszapfen in der Art eines "innenliegenden Stabilisierungselements" auf besonders einfache und zuverlässige Weise eine kraftseitige Kopplung der beiden Implantat-Teile miteinander möglich ist, so dass die in das Aufbauteil beispielsweise aufgrund von Kaubewegungen oder dergleichen eingeleiteten Kräfte zuverlässig und unter weitgehender Vermeidung von Materialermüdung oder Schwächung des Verbindungsgefüges in das Pfostenteil und über dieses in den Kieferknochen eingeleitet werden können. Durch die gekapselte Anordnung des Versteifungszapfens im Inneren der Implantat-Teile ist diese erhöhte mechanische Stabilität auch bei hoher Dichtigkeit gegenüber eindringenden Keimen oder Verunreinigungen erreichbar, so dass ein auch im Hinblick auf lange Nutzungsdauern stabiles System erreichbar ist. Durch die Verwendung von PEEK-, bzw. Keramikbauteilen wird die Anhaftung von Plaque und den damit verbundenen, weiteren Ablagerungen zudem noch weiter wirksam eingegrenzt.

Ein Ausführungsbeispiel der Erfindung wird anhand einer Zeichnung näher erläutert. Darin zeigen:
- Figur 1: ein Dental-Implantatsystem in Seitenansicht,
- Figur 2: das Dental-Implantatsystem nach Figur 1 im Längsschnitt,
- Figur 3: das Dental-Implantatsystem nach Figur 1 im Querschnitt,
- Figur 4: eine Explosionszeichnung des Dental-Implantatsystems nach Figur 1 und
- Figur 5: eine alternative Ausführungsform eines Dental-Implantatsystems im Längsschnitt.

Gleiche Teile sind in allen Figuren mit denselben Bezugszeichen versehen.

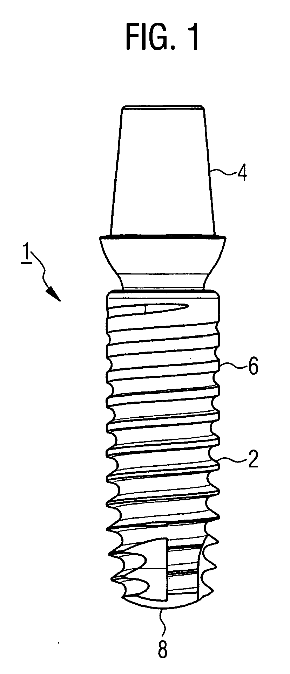

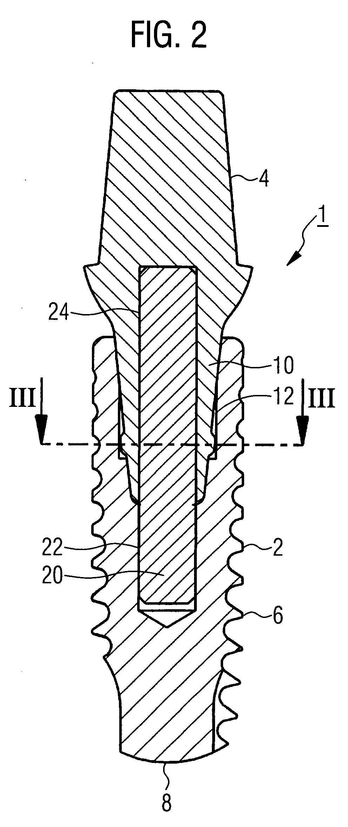

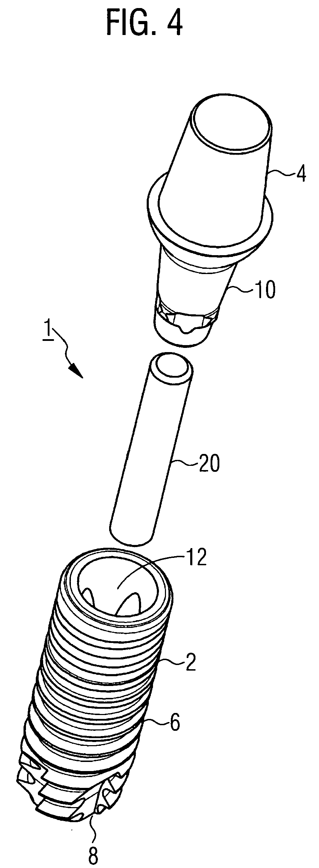

Das Dental-Implantatsystem 1,1' gemäß den Figuren 1 bis 5 ist zum Einsatz in den Kieferknochen anstelle eines extrahierten oder ausgefallenen Zahnes vorgesehen, um dort ein als Zahnersatz dienendes prothetisches Teil oder eine Krone zu halten. Das Dental-Implantatsystem 1, 1' ist dazu mehrteilig ausgeführt und umfasst ein als sogenanntes Pfostenteil ausgeführtes erstes Implantat-Teil 2, 2' und ein diesem zugeordnetes, zur Anbringung eines Zahnersatzstücks vorgesehenes, auch als Aufbauteil bezeichnetes zweites Implantat-Teil 4. Das erste Implantat-Teil 2, 2' oder Pfostenteil ist dabei außenseitig mit einem Außengewinde 6 versehen, das insbesondere am apikalen Ende 8 als selbstschneidendes Schraubengewinde ausgestaltet ist. Damit kann das erste Implantat-Teil 2, 2' oder Pfostenteil durch Einschrauben an der vorgesehenen Stelle in den Kieferknochen eingesetzt werden.

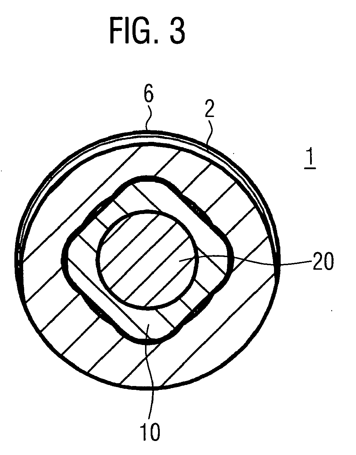

Um nach geeigneter Anbringung des Zahnersatzstücks oder der Prothese am Aufbauteil oder zweiten Implantat-Teil 4 ein Einbringen in das Pfostenteil oder erste Implantat-Teil 2, 2' bei hoher mechanischer Stabilität zu ermöglichen, ist an das zweite Implantat-Teil 4 ein Verbindungszapfen 10 angeformt, der in einen zugeordneten, im ersten Implantat-Teil 2, 2'vorgesehenen Aufnahmekanal 12 einschiebbar ist. Durch das Einschieben des Verbindungszapfens 10 in den Aufnahmekanal 12 entsteht eine mechanische Verbindung der Implantat-Teile 2, 4 miteinander. Für eine hohe mechanische Stabilität ist dabei der Verbindungszapfen 10 in seiner Außenkontur an die Innenkontur des Aufnahmekanals 12 angepasst, wobei beide in Längsrichtung gesehen konisch geformt sein können. Zudem ist, wie dies insbesondere der Querschnittdarstellung in Fig. 3 entnehmbar ist, die Außenkontur des Verbindungszapfens 10 - und dem entsprechend angepasst die Innenkontur des Aufnahmekanals 12 - im Querschnitt mit einer mehrzähligen Symmetrie ausgestaltet, so dass beim Zusammenfügen der genannten Komponenten ein rotatorisches Gesperre entsteht und damit eine zuverlässige rotator-ische Ausrichtung des Aufbauteils relativ zum Pfostenteil eingestellt werden kann.

Hinsichtlich ihrer Materialwahl sind die Implantat-Teile 2, 4 geeignet an den Einsatzzweck angepasst und grundsätzlich aus keramischem Material wie beispielsweise Zyrkonoxid oder Aluminiumoxid gefertigt. Alternativ kann auch eines oder beide der Implantat-Teile 2, 4 aus einem geeignet gewählten Kunststoff, insbesondere aus PEEK gefertigt sein.

Das Dental-Implantatsystem 1, 1' ist für eine besonders hohe mechanische Belastbarkeit bei hoher Dichtigkeit gegenüber möglicherweise eindringenden Keimen oder Verunreinigungen ausgelegt. Dazu ist im Verbindungsbereich von Verbindungszapfen 10 und Aufnahmekanal 12 in der Art eines innenliegenden Stabilisierungselements ein Versteifungszapfen 20 vorgesehen, der sowohl in den Grundkörper des ersten Implantat-Teils 2, 2' als auch in den Grundkörper des zweiten Implantat-Teils 4 hineinragt. Dazu weisen sowohl das erste Implantat-Teil 2, 2' einen Aufnahmekanal 22, als auch das zweite Implantat-Teil 4 einen Aufnahmekanal 24 auf, in dem der Versteifungszapfen 20 in montierten Zustand jeweils formschlüssig geführt ist. Durch den Versteifungszapfen 20 ist somit auf besonders zuverlässige Weise eine Kräfteeinleitung vom zweiten Implantat-Teil 4 oder Aufbauteil in das erste Implantat-Teil 2, 2' oder Pfostenteil sichergestellt, ohne dass der Verbindungs- oder Fügebereich zwischen diesen Teilen einer übermäßigen Belastung bei der Kräfteweiterleitung ausgesetzt wird.

Der Versteifungszapfen 20 weist dazu eine im Wesentlichen zylindrische Form auf, so dass er auf besonders einfach Weise in die jeweiligen Aufnahmekanäle 22, 24 eingebracht werden kann. Im Ausführungsbeispiel ist der Versteifungszapfen 20 im Hinblick auf eine erwünschte besonders hohe Festigkeit ebenfalls aus Keramik, insbesondere aus Zyrkonoxid oder Aluminiumoxid, hergestellt. Alternativ kann aber auch Titan oder eine Titanlegierung als Grundstoff für die Versteifungszapfen 20 vorgesehen sein. Ebenso sind Kombinationen aus den genannten Materialien oder ein Rückgriff auf andere geeignete Materialien mit einer ausreichend hohen mechanischen Festigkeit möglich.

Um dabei eine besonders hohe Dichtigkeit des Gesamtsystems gegenüber Keimen oder Verunreinigungen zu gewährleisten, ist der Versteifungszapfen 20 in der Art einer gekapselten Ausführung vollständig von den Implantat-Teilen 2, 4 umschlossen.

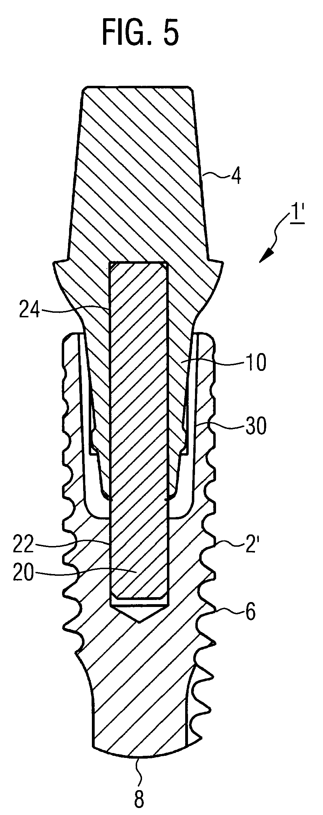

Im Ausführungsbeispiel nach Fig. 5 ist zusätzlich zwischen den Implantat-Teilen 2', 4 ein Dämpfungskörper 30 aus einem im Vergleich zu mindestens einem der Implantat-Teile 2', 4 weicheren Material im Ausführungsbeispiel PEEK, angeordnet. Durch den Dämpfungskörper 30 können dabei eingeleitete Kräfte vornehmlich über den Versteifungszapfen 20 weitergeleitet werden, ohne dass die eigentliche Verbindungsstelle zwischen den Implantat-Teilen 2', 4 einem zu hohen Leistungsstress ausgesetzt wird.

### Bezugszeichenliste

- 1, 1': Dental-Implantatsystem
- 2, 2': erstes Implantat-Teil
- 4: zweites Implantat-Teil
- 6: Außengewinde
- 8: apikales Ende
- 10: Verbindungszapfen
- 12: Aufnahmekanal
- 20: Versteifungszapfen
- 22: Aufnahmekanal
- 24: Aufnahmekanal
- 30: Dämpfungskörper

## Patentansprüche

1. Dental-Implantatsystem (1, 1') mit einem zur Einbringung in einen Kieferknochen vorgesehenen ersten Implantat-Teil (2, 2') und mit einem diesem zugeordneten, zur Anbringung eines Zahnersatzstücks vorgesehenen zweiten Implantat-Teil (4), mit nur einem Verbindungszapfen (10), der an eines der Implantat-Teile (2, 2',4) angeformt und in einen im anderen Implantat-Teil (2, 2',4) vorgesehenen, mit seiner Innenkontur an die Außenkontur des Verbindungszapfens (10) angepassten Aufnahmekanal (12) einschiebbar ist, und über den die Implantat-Teile (2, 2',4) mechanisch miteinander verbindbar sind,
**gekennzeichnet durch**
einen zusätzlich zum Verbindungszapfen (10) vorgesehenen Versteifungszapfen (20), der im eingeschobenen Zustand des Verbindungszapfens (10) vollständig von den Implantat-Teilen (2, 2',4) umschlossen ist und sowohl in den Grundkörper des ersten Implantat-Teils (2, 2') als auch in den Grundkörper des zweiten Implantat-Teils (4) hineinragt.

2. Dental-Implantatsystem (1, 1') nach Anspruch 1, dessen Versteifungszapfen (20) in montiertem Zustand endseitig jeweils formschlüssig in einem zugeordneten Aufnahmekanal (22, 24) des jeweiligen Implantat-Teils (2, 2',4) geführt ist.

3. Dental-Implantatsystem (1, 1') nach Anspruch 1 oder 2, dessen Versteifungszapfen (20) eine im wesentlichen zylindrische Form aufweist.

4. Dental-Implantatsystem (1, 1') nach einem der Ansprüche 1 bis 3, bei dem zumindest eines der Implantat-Teile (2, 2',4) aus einem keramischen Grundstoff, vorzugsweise aus Zirkonoxid oder Aluminiumoxid, hergestellt ist.

5. Dental-Implantatsystem (1, 1') nach einem der Ansprüche 1 bis 4, bei dem zumindest eines der Implantat-Teile (2, 2',4) aus einem Kunststoff, vorzugsweise aus PEEK, hergestellt ist.

6. Dental-Implantatsystem (1, 1') nach einem der Ansprüche 1 bis 5, dessen Versteifungszapfen (20) aus einem keramischen Grundstoff, vorzugsweise aus Zirkonoxid oder Aluminiumoxid, oder aus Titan oder aus einer Titanlegierung hergestellt ist.

7. Dental-Implantatsystem (1, 1') nach einem der Ansprüche 1 bis 6, dessen Implantat-Teile (2, 2',4) durch Verklebung, Zementierung oder Verpressung miteinander verbunden sind.

8. Dental-Implantatsystem (1, 1') nach einem der Ansprüche 1 bis 7, bei dem der Verbindungszapfen (10) im Querschnitt eine an die Kontur des zugeordneten Aufnahmekanals (12) angepasste Aussenkontur aufweist.

9. Dental-Implantatsystem (1, 1') nach Anspruch 8, bei dem die Aussenkontur des Verbindungszapfens (10) im Querschnitt eine mehrzählige Symmetrie aufweist.

10. Dental-Implantatsystem (1, 1') nach einem der Ansprüche 1 bis 9, bei dem im montierten Zustand zwischen den Implantat-Teilen (2, 2',4) ein Dämpfungskörper (30) aus einem im Vergleich zu mindestens einem der Implantat-Teile (2, 2',4) weicheren Material angeordnet ist.

11. Dental-Implantatsystem (1, 1') nach Anspruch 10, dessen Dämpfungskörper (30) aus einem Kunststoff, vorzugsweise aus PEEK, hergestellt ist.

## Claims

1. Dental implant system (1, 1') having a first implant component (2, 2') intended for insertion into a jawbone and having a second implant component (4) that is associated with said first implant component and intended for attaching a dental prosthesis,
having a connecting pin (10) that is integrally moulded onto one of the implant components (2, 2', 4) and can be inserted into a receiving channel (12) which is provided in the other implant component (2, 2', 4) and the inner contour of which is adapted to the outer contour of the connecting pin (10), and by means of which connecting pin the implant components (2, 2', 4) can be mechanically interconnected, **characterised by**
a reinforcing pin (20) that is provided in addition to the connecting pin (10) and, when the connecting pin (10) is inserted, is completely enclosed by the implant components (2, 2', 4) and extends into both the main body of the first implant component (2, 2') and the main body of the second implant component (4).

2. Dental implant system (1, 1') according to claim 1, the reinforcing pin (20) of which, in the assembled state, is guided at each end and in a form-fitting manner in an associated receiving channel (22, 24) in each of the implant components (2, 2', 4).

3. Dental implant system (1, 1') according to either claim 1 or claim 2, the reinforcing pin (20) of which is substantially cylindrical.

4. Dental implant system (1, 1') according to any of claims 1 to 3, wherein at least one of the implant components (2, 2', 4) is produced from a ceramic basic material, preferably from zirconium oxide or aluminium oxide.

5. Dental implant system (1, 1') according to any of claims 1 to 4, wherein at least one of the implant components (2, 2', 4) is produced from a plastics material, preferably from PEEK.

6. Dental implant system (1, 1') according to any of claims 1 to 5, the reinforcing pin (20) of which is produced from a ceramic basic material, preferably from zirconium oxide or aluminium oxide, or from titanium or a titanium alloy.

7. Dental implant system (1, 1') according to any of claims 1 to 6, the implant components (2, 2', 4) of which are interconnected by bonding, cementation or pressing.

8. Dental implant system (1, 1') according to any of claims 1 to 7, wherein the connecting pin (10) has an outer contour adapted to the contour of the associated receiving channel (12) in cross section.

9. Dental implant system (1, 1') according to claim 8, wherein the outer contour of the connecting pin (10) is symmetrical on multiple axes in cross section.

10. Dental implant system (1, 1') according to any of claims 1 to 9, wherein a damping body (30) made from a material that is softer than at least one of the implant components (2, 2', 4) is arranged between the implant components (2, 2', 4) in the assembled state.

11. Dental implant system (1, 1') according to claim 10, the damping body (30) of which is produced from a plastics material, preferably from PEEK.

## Revendications

1. Système d'implant dentaire (1, 1') avec une première partie d'implant (2, 2') prévue pour être mise en place dans un os maxillaire et avec une deuxième partie d'implant (4), associée à cette première, prévue pour la pose d'une prothèse dentaire,
avec une broche de liaison (10) qui est formée au niveau de l'une des parties d'implant (2, 2', 4) et qui peut être inséré dans un canal de logement (12), prévu dans l'autre partie d'implant (2, 2', 4), et dont le contour intérieur est adapté au contour extérieur de la broche de liaison (10), et par l'intermédiaire de laquelle les parties d'implant (2, 2', 4) peuvent être reliées mécaniquement l'une à l'autre,
**caractérisé par**
une broche de renforcement (20) prévue en sus de la broche de liaison (10), laquelle broche de renforcement est, à l'état inséré de la broche de liaison (10), intégralement recouverte par les parties d'implant (2, 2', 4) et pénètre aussi bien dans le corps de base de la première partie d'implant (2, 2') que dans le corps de base de la deuxième partie d'implant (4).

2. Système d'implant dentaire (1, 1') selon la revendication 1, dont la broche de renforcement (20) est guidée respectivement, à l'état monté, par assemblage de forme aux extrémités, dans un canal de logement (22, 24) lui étant associé de la partie d'implant (2, 2', 4) respective.

3. Système d'implant dentaire (1, 1') selon la revendication 1 ou 2, dont la broche de renforcement (20) présente une forme essentiellement cylindrique.

4. Système d'implant dentaire (1, 1') selon l'une des revendications 1 à 3, dans lequel tout au moins l'une des parties d'implant (2, 2', 4) est fabriquée à partir d'un matériau de base céramique, de préférence en oxyde de zirconium ou en oxyde d'aluminium.

5. Système d'implant dentaire (1, 1') selon l'une des revendications 1 à 4, dans lequel tout au moins l'une des parties d'implant (2, 2', 4) est fabriquée à partir d'un matériau plastique, de préférence en PEEK.

6. Système d'implant dentaire (1, 1') selon l'une des revendications 1 à 5, dont la broche de renforcement (20) est fabriquée à partir d'un matériau de base céramique, de préférence en oxyde de zirconium ou en oxyde d'aluminium, ou bien en titane ou en un alliage de titane.

7. Système d'implant dentaire (1, 1') selon l'une des revendications 1 à 6, dont les parties d'implant (2, 2', 4) sont reliées l'une à l'autre par collage, par scellement ou par pressage.

8. Système d'implant dentaire (1, 1') selon l'une des revendications 1 à 7, dans lequel la broche de liaison (10) présente dans sa section transversale un contour extérieur adapté au contour du canal de logement (12) lui étant associé.

9. Système d'implant dentaire (1, 1') selon la revendication 8, dans lequel le contour extérieur de la broche de liaison (10) présente une symétrie multiple dans sa section transversale.

10. Système d'implant dentaire (1, 1') selon l'une des revendications 1 à 9, dans lequel, à l'état monté, un corps d'amortissement (30), composé d'un matériau plus mou par comparaison avec au moins l'une des parties d'implant (2, 2', 4), est disposé entre les parties d'implant (2, 2', 4).

11. Système d'implant dentaire (1, 1') selon la revendication 10, dont le corps d'amortissement (30) est fabriqué à partir d'un matériau plastique, de préférence en PEEK.
